# EUROPÄISCHE PATENTANMELDUNG

(11) **EP 4 817 787 A1**
(43) Veröffentlichungstag der Anmeldung: **07.10.2026**
(21) Anmeldenummer: 25168041.9
(22) Anmeldetag: 02.04.2025
(51) Int. Cl.: B23Q 1/00, B23Q 1/58, B23Q 1/62, B23Q 37/00

(54) **BEARBEITUNGSZENTRUM ZUR MECHANISCHEN BEARBEITUNG VON WERKSTÜCKEN**

(71) Anmelder: MG Beteiligungsgesellschaft mbH, 73312 Geislingen/Steige (DE)
(72) Erfinder: Magnus, Grüner, 73312 Geislingen an der Steige (DE)
(74) Vertreter: Patentanwälte Magenbauer & Kollegen Partnerschaft mbB

(57) **Zusammenfassung**

Bei einem Bearbeitungszentrum zur mechanischen Bearbeitung von Werkstücken (80), mit wenigstens einer Bearbeitungseinheit (12), die einen mit einem Bearbeitungswerkzeug zur Bearbeitung eines in einer Bearbeitungszone angeordneten Werksstücks (80) bestückbaren Werkzeugschlitten (18) und eine mit einem Werkstückmodul (19a-19c) zur Aufnahme des zu bearbeitenden Werkstücks (80) bestückbaren Werkstückpositioniereinheit (20) aufweist, wobei das Werkstückmodul (19a-19c) mit der Werkstückpositioniereinheit (20) über eine Schnittstelleneinrichtung (34) lösbar, ein Auswechseln des Werkstückmoduls (19a-19c) erlaubend verbunden ist, wobei die Schnittstelleneinrichtung (34) eine werkstückpositionierseitige Schnittstelle (35) und eine hierzu korrespondierende modulseitige Gegen-Schnittstelle (36) aufweist, wobei an Schnittstelle (35) und Gegen-Schnittstelle (36) eine Befestigungseinrichtung (38) zur Befestigung von Werkstückpositioniereinheit (20) und Werkstückmodul (19a-19c) aneinander ausgebildet sind, und wobei an der Schnittstelle und Gegen-Schnittstelle eine Fluidübergabeeinrichtung (39) zur Übergabe eines Arbeitsfluids von der Werkstückpositioniereinheit (20) an das Werkstückmodul (19a-19c) ausgebildet ist, sind an Schnittstelle (35) und Gegen-Schnittstelle (36) eine elektrische Leistungsenergieübergabeeinrichtung (40) zur Übertragung von elektrischer Leistungsenergie von der Werkstückpositioniereinheit (20) auf das Werkstückmodul (19) und eine Signalübergabeeinrichtung (41) zur Ermöglichung einer Signalübertragung zwischen der Werkstückpositioniereinheit (20) und dem Werkstückmodul (19a-19c) ausgebildet.

## Beschreibung

Die Erfindung betrifft ein Bearbeitungszentrum zur mechanischen Bearbeitung von Werkstücken, mit wenigstens einer Bearbeitungseinheit, die einen mit einem Bearbeitungswerkzeug zur Bearbeitung eines in einer Bearbeitungszone angeordneten Werksstücks bestückbaren Werkzeugschlitten und eine mit einem Werkstückmodul zur Aufnahme des zu bearbeitenden Werkstücks bestückbaren Werkstückpositioniereinheit aufweist, wobei der Werkzeugschlitten in einer Achsrichtung und die Werkstückpositioniereinheit in die beiden anderen Achsrichtungen eines durch drei senkrecht aufeinander stehende Achsrichtungen X, Y, Z gebildeten kartesischen Koordinatensystems bewegbar sind, und wobei das Werkstückmodul um eine erste Rotationsachse rotierbar ist, wobei das Werkstückmodul mit der Werkstückpositioniereinheit über eine Schnittstelleneinrichtung lösbar, ein Auswechseln des Werkstückmoduls erlaubend verbunden ist, wobei die Schnittstelleneinrichtung eine werkstückpositionierseitige Schnittstelle und eine hierzu korrespondierende modulseitige Gegen-Schnittstelle aufweist, wobei an Schnittstelle und Gegen-Schnittstelle eine Befestigungseinrichtung zur Befestigung von Werkstückpositioniereinheit und Werkstückmodul aneinander ausgebildet ist, und wobei an der Schnittstelle und Gegen-Schnittstelle eine Fluidübergabeeinrichtung zur Übergabe eines Arbeitsfluids von der Werkstückpositioniereinheit an das Werkstückmodul ausgebildet ist.

Ein Bearbeitungszentrum dieser Art ist beispielsweise aus der DE 10 2019 120 681 A1 bekannt. Die dort offenbarte Werkzeugmaschine besitzt eine Werkzeugspindel und einen Werkstückhalter, der an einem Träger angeordnet ist, wobei der Träger über mehrere Antriebsanordnungen beziehungsweise Maschinenachsen in mehreren linearen und rotatorischen Freiheitsgraden bewegbar ist. Die Werkzeugspindel ist über eine erste Linearantriebsanordnung vorzugsweise lediglich in einem einzigen Freiheitsgrad bewegbar. Mittels einer ersten Rotationsantriebsanordnung kann der Träger zwischen einer Arbeitsstellung und einer Wechselstellung um eine erste Drehachse geschwenkt werden. Die erste Drehachse erstreckt sich in einer Vertikalebene schräg zur Vertikalen und schräg zur Horizontalen. Die Werkzeugmaschine ist zur 4-Achs-Bearbeitung von Werkstücken eingerichtet.

Aufgabe der Erfindung ist es, ein Bearbeitungszentrum der eingangs erwähnten Art zu schaffen, mit dem im Vergleich zur herkömmlichen Bearbeitungszentren die Produktivität des Bearbeitungszentrums gesteigert werden kann.

Diese Aufgabe wird durch ein Bearbeitungszentrum mit den Merkmalen der unabhängigen Ansprüche 1 und 14 gelöst. Weiterbildungen der Erfindung sind in den Unteransprüchen dargestellt.

Das erfindungsgemäße Bearbeitungszentrum gemäß dem unabhängigen Anspruch 1 zeichnet sich dadurch aus, dass an Schnittstelle und Gegen-Schnittstelle eine elektrische Leistungsenergieübergabeeinrichtung zur Übergabe von elektrischer Leistungsenergie von der Werkstückpositioniereinheit auf das Werkstückmodul und eine Signalübergabeeinrichtung zur Ermöglichung einer Signalübertragung zwischen der Werkstückpositioniereinheit und dem Werkstückmodul ausgebildet sind.

Mit der Schnittstelleneinrichtung wird also nicht nur, wie beim Stand der Technik, eine mechanische Befestigung des Werkstückmoduls an der Werkstückpositioniereinheit realisiert und ein Arbeitsfluid übergeben, sondern darüber hinaus kann elektrische Leistungsenergie übergeben bzw. übertragen werden und auch eine Signalübertragung zwischen dem Werkstückmodul und der Werkstückpositioniereinheit kann stattfinden. Dies ermöglicht, dass das Werkstückmodul im Bedarfsfall relativ einfach gegen ein anderes ähnlicher Bauart ausgetauscht werden kann oder auch gegen ein Werkstückmodul getauscht werden kann, das sich von der Bauart unterscheidet und gegenüber dem Standard-Werkstückmodul zusätzliche Funktionen hat, die eine Einbringung von elektrischer Leistungsenergie und eine Signalübertragung erforderlich machen. Dadurch ist es möglich, dass mit einem einzigen Bearbeitungszentrum ganz unterschiedliche Werkstücke mit ganz unterschiedlichen Bearbeitungsanforderungen bearbeitet werden können, in dem über die Schnittstelleneinrichtung ein individuell an das zu bearbeitende Werkstück angepasstes Werkstückmodul eingewechselt beziehungsweise ausgewechselt wird.

In besonders bevorzugter Weise ist das Werkstückmodul als Spannvorrichtungs-Werkzeugmodul zur Aufnahmen und zum Festspannen des zu bearbeitenden Werkstücks ausgebildet, wobei die Spannvorrichtung mittels des über die Schnittstelleneinrichtung übertragenen Arbeitsfluids, insbesondere Hydraulikflüssigkeit, betätigbare Spannelemente zum Festspannen des zu bearbeitenden Werkstücks aufweist. Ein derartiges Spannvorrichtung-Werkzeugmodul könnte auch als 4-Achs-Modul bezeichnet werden, wobei hier nicht der Bedarf besteht, elektrische Leistungsenergie in das Spannvorrichtung-Werkzeugmodul einzubringen. Jedoch ist es auch hier erforderlich, die Spannvorrichtung-Werkzeugmodule austauschen zu können, da je nach zu bearbeitenden Werkstück anders gespannt wird, das heißt die Spannelemente eine ganz individuell auf das zu bearbeitenden Werkstück einnehmende Anordnung aufweisen.

Alternativ zum Spannvorrichtung-Werkzeugmodul, kann das Werkstückmodul auch als Rundtisch-Werkstückmodul ausgebildet sein, mit wenigstens einem mittels um eine zweite Rotationsachse rotierbaren, insbesondere nc gesteuerten Rundtisch, an dem eine Spanneinheit zur Aufnahme und zum Festspannen eines zu bearbeitendes Werkstücks befestigbar ist, wobei sich der elektrische Rotationsantrieb an Bord des Rundtisch-Werkstückmoduls befindet und die elektrische Leistungsenergie für den Rotationsantrieb über die Schnittstelleneinrichtung einleitbar ist. Ein derartiges Rundtisch-Werkstückmodul kann auch als 5-Achs-Werkstückmodul bezeichnet werden.

Mit einer derartigen Ausgestaltung ist es also möglich, das Bearbeitungszentrum von einer 4-Achs-Bearbeitung auf eine 5-Achs-Bearbeitung umzurüsten, ohne dass es hierbei komplizierte Umbauarbeiten bedarf, sondern es besteht lediglich der Bedarf eines Austauschs des Spannvorrichtung-Werkzeugmoduls an der Schnittstelleneinrichtung durch ein Rundtisch-Werkstückmodul.

Es ist möglich, dass das Rundtisch-Werkstückmodul als einfaches Rundtisch-Werkstückmodul mit einem einzelnen Rundtisch ausgebildet ist. Darüber hinaus ist es auch denkbar, dass das Werkstückmodul einen zusätzlichen, weiteren Rundtisch aufweist, der um eine insbesondere parallel zur zweiten Rotationsachse ausgerichtete dritte Rotationsachse rotierbar ist, an dem eine weitere Spanneinheit zur Aufnahme und zum Festspannen eines zu bearbeitendes Werkstücks befestigbar ist. Ein derartiges Rundtisch-Werkstückmodul könnte auch als Doppel-5-Achs-Modul bezeichnet werden.

Im Falle der Ausgestaltung des Werkstückmoduls als doppeltes Rundtisch-Werkstückmodul ist der Rotationsantrieb zweckmäßigerweise zum Antrieb beider Rundtische ausgebildet.

Bei einer Weiterbildung der Erfindung ist dem Werkstückmodul eine Positionserkennungseinrichtung zur Erkennung der Drehposition des zugeordneten Rundtischs zugeordnet, wobei die Positionserkennungseinrichtung wenigstens einen an Bord des Werkstückmoduls befindlichen Positionsdetektor, insbesondere Positionssensor, aufweist, dessen Detektorsignale über die Schnittstelleneinrichtung übermittelt werden. Die Übermittlung kann beispielsweise an eine übergeordnete Steuereinheit erfolgen, beispielweise in Form einer Steuerung, beispielsweise CNC-Steuerung. Der Positionssensor kann beispielsweise als Drehgeber beziehungsweise Encorder ausgebildet sein.

Bei einer Weiterbildung der Erfindung weist die Befestigungseinrichtung an der Schnittstelle ausgebildete Befestigungselemente und an der Gegen-Schnittstelle ausgebildete Gegen-Befestigungselemente auf, die zur Befestigung des Werkstückmoduls an der Werkstückpositioniereinheit in Eingriff miteinander und zum Lösen des Werkstückmoduls außer Eingriff zueinander bringbar sind.

In besonders bevorzugter Weise sind die Befestigungselemente und/oder Gegen-Befestigungselemente über Spannmittel zwischen einer Spannstellung und einer das Werkstückmodul freigebenden Freigabestellung relativ beweglich zur zugeordneten Schnittstelle bzw. Gegen-Schnittstelle gelagert. Es ist beispielsweise möglich, dass die Befestigungselemente oder Gegen-Befestigungselemente als fluidbeaufschlagbare Spannkoni ausgebildet sind, die bei der Beaufschlagung mittels einem Arbeitsfluids in die Spannstellung bewegt werden. Das Arbeitsfluid kann beispielsweise Hydraulikflüssigkeit, insbesondere Hydrauliköl sein.

Bei einer Weiterbildung der Erfindung ist die elektrische Leistungsübergabeeinrichtung als elektromechanische Steckverbindungseinrichtung ausgebildet, mit einem elektrischen Rundsteckverbinder zum Einstecken in ein elektrisches Gegenstück und dem elektrischen Gegenstück. Es ist beispielsweise möglich, dass der Rundsteckverbinder als Steckdose mit weiblichen Steckkontakten ausgebildet ist, während das Gegenstück mit männlichen Gegen-Steckkontakten beispielsweise Steckpins ausgebildet ist. Es ist möglich, dass der Rundsteckverbinder an der Schnittstelle und das Gegenstück an der Gegen-Schnittstelle ausgebildet sind. Es ist jedoch auch eine umgekehrte Anordnung von Rundsteckverbinder an der Gegen-Schnittstelle und Gegenstück an der Schnittstelle möglich.

Bei einer Weiterbildung der Erfindung ist die Signalübergabeeinrichtung als weitere elektromechanische Steckverbindungseinrichtung ausgebildet, mit einem elektrischen Signal-Rundsteckverbinder zum Einstecken in ein elektrisches Signal-Gegenstück. Auch hier kann der Signal-Rundsteckverbinder als Steckdose mit weiblichen Steckkontakten und das Signal-Gegenstück mit männlichen Gegen-Steckkontakten, beispielsweise Steckpins ausgebildet sein.

Bei einer Weiterbildung der Erfindung ist die Schnittstelle an der Unterseite eines um die erste Rotationsachse rotatorisch antreibbaren, an der Werkstückpositioniereinheit angeordneten Drehtellers ausgebildet. Der mit der Schnittstelle ausgestattete Endbereich des Drehtellers kann hierzu rechteckig, vorzugsweise quadratisch ausgebildet sein.

Bei einer Weiterbildung der Erfindung ist die Gegen-Schnittstelle an einer insbesondere rechteckförmigen Gegen-Schnittstellenplatte ausgebildet. Eine derartige Gegen-Schnittstellenplatte kann auch als Werkstückpalette bezeichnet werden. Alternativ ist es denkbar, dass das Werkstückmodul L-förmig ausgebildet ist und die Gegen-Schnittstelle an einem plattenförmigen Gegen-Schnittstellenabschnitt ausgebildet ist, insbesondere im Falle eines Rundtisch-Werkstückmoduls.

Die Erfindung umfasst ferner ein Bearbeitungszentrum mit den Merkmalen des unabhängigen Anspruchs 14.

Das erfindungsgemäße Bearbeitungszentrum gemäß Anspruch 14 weist wenigstens eine Bearbeitungseinheit auf, die einen mit einem Bearbeitungswerkzeug zur Bearbeitung eines in einer Bearbeitungszone angeordneten Werksstücks bestückbaren Werkzeugschlitten und eine mit einem Werkstückmodul zur Aufnahme des zu bearbeitenden Werkstücks bestückbaren Werkstückpositioniereinheit aufweist, wobei der Werkzeugschlitten in eine Achsrichtung und die Werkstückpositioniereinheit in die beiden anderen Achsrichtungen eines durch drei senkrecht aufeinander stehende Achsrichtungen X, Y, Z gebildeten kartesischen Koordinatensystems bewegbar sind, und wobei das Werkstückmodul um eine erste Rotationsachse rotierbar ist, wobei das Werkstückmodul mit der Werkstückpositioniereinheit über eine Schnittstelleneinrichtung lösbar, ein Auswechseln des Werkstückmoduls erlaubend verbunden ist, wobei die Schnittstelleneinrichtung eine werkstückpositionierseitige Schnittstelle und eine hierzu korrespondierende modulseitige Gegen-Schnittstelle aufweist, wobei das Werkzeugmodul ausgewählt ist aus der Gruppe bestehend aus die Gegen-Schnittstelle aufweisendes Spannvorrichtung-Werkstückmodul zur Aufnahme und Festspannen des zu bearbeitenden Werkstücks, wobei die Spannvorrichtung mittels Arbeitsfluid betätigbare Spannelemente zum Festspannen des zu bearbeitenden Werkstücks aufweist und die Gegen-Schnittstelle aufweisendes Rundtisch-Werkzeugmodul, mit wenigstens einem mittels eines elektrischen Rotationsantriebs um eine zweite Rotationsachse rotierbaren Rundtisch, an dem eine Spanneinheit zur Aufnahme und zum Festspannen eines zu bearbeitendes Werkstücks befestigbar ist, wobei wahlweise das Spannvorrichtung-Werkzeugmodul oder das Rundtisch-Werkzeugmodul über die Schnittstelleneinrichtung an der Werkstückpositioniereinheit befestigbar ist.

Die Baugruppe aus Spannvorrichtung-Werkstückmodul und Rundtisch-Werkstückmodul erlaubt also eine hohe Flexibilität, da das Bearbeitungszentrum durch einfache Maßnahmen von einer 4-Achs-Bearbeitung auf eine 5-Achs-Bearbeitung und umgekehrt umgestellt werden kann.

Bei einer Weiterbildung der Erfindung ist das Rundtisch-Werkstückmodul entweder ein einfaches Rundtisch-Werkstückmodul mit einem einzelnen Rundtisch oder ein doppeltes Rundtisch-Werkstückmodul mit einem ersten und einem zweiten, um eine dritte Rotationsachse rotatorisch antreibbaren Rundtisch.

Ein bevorzugtes Ausführungsbeispiel der Erfindung ist in der Zeichnung dargestellt und wird im Folgenden näher erläutert.

### In der Zeichnung zeigen:

- Figur 1: eine Seitenansicht auf einen Teil des erfindungsgemäßen Bearbeitungszentrums,
- Figur 2: eine vergrößerte Darstellung der Einzelheit X aus Figur 1,
- Figur 3: eine Unteransicht auf die Schnittstelle an der Werkstückpositioniereinheit des Bearbeitungszentrums von Figur 1,
- Figur 4: eine gegenüber der in Figur 2 dargestellten Ausführungsform alternativen Ausführungsform des Werkstückmoduls in Form,
- Figur 5: eine perspektivische Darstellung des Werkstückmoduls von Figur 4,
- Figur 6: eine perspektivische Darstellung des Werkstückmoduls von Figur 5 bestückt mit Spanneinheiten zur Aufnahme und Lagerung von Werkstücken (nicht dargestellt) und
- Figur 7: eine weitere alternative Ausführungsform des Werkstückmoduls in Form eines Spannvorrichtung-Werkstückmoduls.

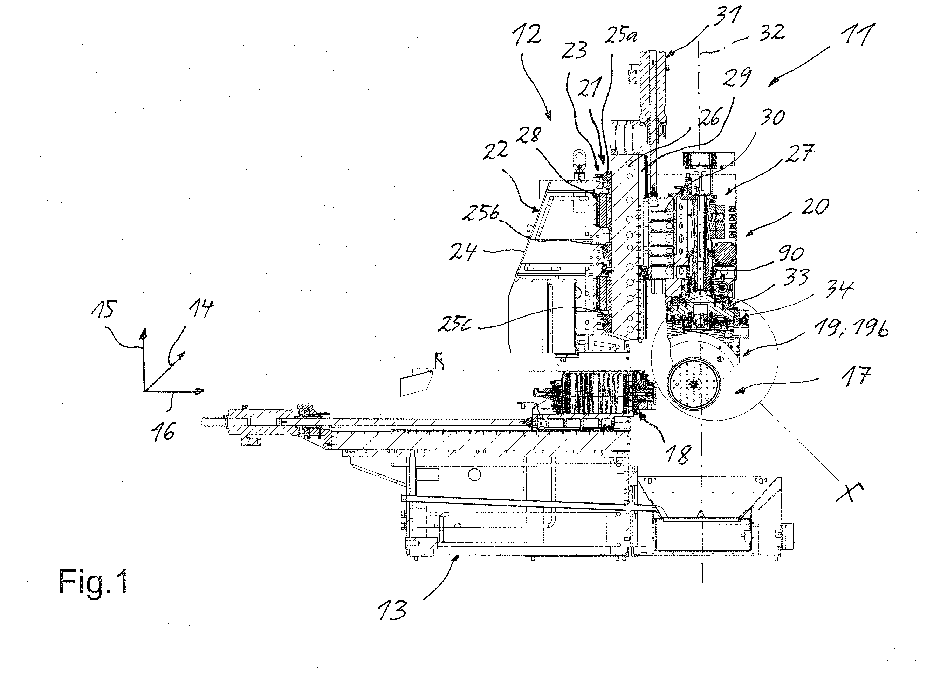

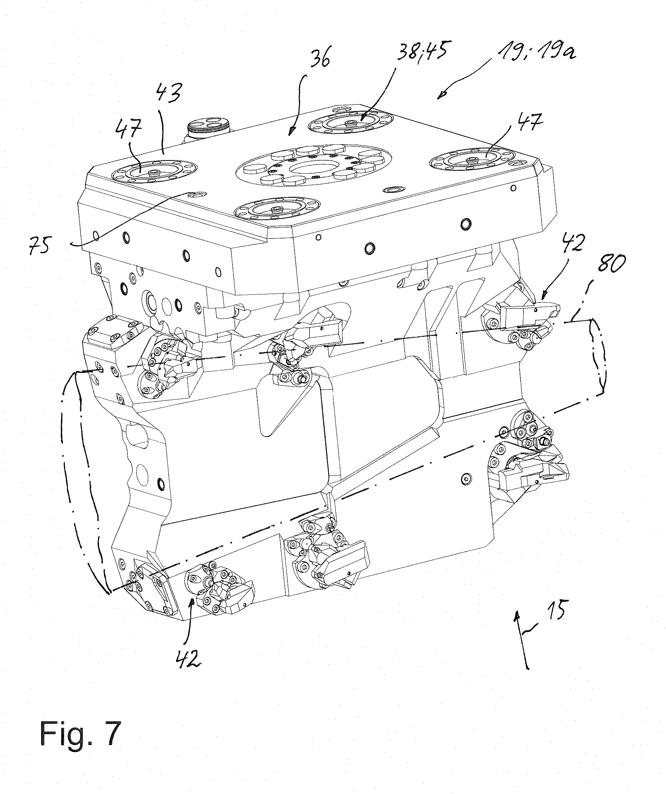

Die Figuren 1 bis 7 zeigen ein bevorzugtes Ausführungsbeispiel des erfindungsgemäßen Bearbeitungszentrums 11 zur mechanischen, insbesondere spanabhebenden Bearbeitung von Werkstücken 80 (Fig.7). Die Werkstücke 80 können beispielsweise Getriebegehäuse, Kupplungsgehäuse, Elektromotorengehäuse oder Lenkgehäuse sein. Dies ist jedoch lediglich eine beispielhafte Aufzählung der verschiedenen Arten von Werkstücken 80.

Es sind durchaus weitere, hier nicht genannte Arten von Werkstücken mit dem erfindungsgemäßen Bearbeitungszentrum 11 bearbeitbar.

Kernstück des Bearbeitungszentrums 11 ist eine Bearbeitungseinheit 12. Es ist möglich, dass das Bearbeitungszentrum 11 eine einzelne Bearbeitungseinheit 12 aufweist oder alternativ zwei Bearbeitungseinheiten (nicht dargestellt), wobei die zweite Bearbeitungseinheit in einer in X-Achsrichtung 14 eines durch drei senkrecht aufeinander stehende Achsrichtungen X, Y, Z gebildeten Koordinatensystem benachbart zu der ersten Bearbeitungseinheit angeordnet sein kann.

Im Folgenden wird die Erfindung anhand eines Bearbeitungszentrums mit einer einzigen Bearbeitungseinheit 12 beschrieben, jedoch kann die Erfindung natürlich auch auf ein Bearbeitungszentrum mit zwei Bearbeitungseinheiten angewendet werden.

Das Bearbeitungszentrum 11 weist ein Grundgestell 13 auf, auf dem die Bearbeitungseinheit 12 sitzt. Die Bearbeitungseinheit 12 weist einen in Z-Achsrichtung 16 bewegbaren, mit einem Bearbeitungswerkzeug (nicht dargestellt) zur Bearbeitung eines in einer Bearbeitungszone 17 angeordneten Werkstücks bestückbaren Werkzeugschlitten 18 und eine in einer X-Achsrichtung 14 und in einer Y-Achsrichtung 15 bewegbare, mit einem Werkstückmodul 19 zur Aufnahme und zum Festspannen des zu bearbeitenden Werkstücks bestückbare Werkstückpositioniereinheit 20 auf.

Wie insbesondere in Figur 1 gezeigt, ist der Bearbeitungseinheit 12 für die durchzuführende Bewegung in X-Achsrichtung 14 eine Führungseinrichtung 21 zugeordnet. Die Führungseinrichtung 21 befindet sich an einem am Grundgestell 13 angeordneten Maschinenbett 22, das im vorliegenden Fall als Vertikalbett ausgebildet ist. Das Maschinenbett 22 erstreckt sich im Wesentlichen über die gesamte Breite des Grundgestells 13 und besitzt eine Vorderseite 23, an der die Führungseinrichtung 21 angeordnet ist. Der Vorderseite 23 entgegengesetzt ist eine Rückseite 24 vorgesehen. Das Maschinenbett 22 trennt die Bearbeitungseinheit 12 in einen werkstückseitigen Vorderbereich, in dem in der Bearbeitungszone 17 eine Bearbeitung von Werkstücken 80 durch die zugeordneten Bearbeitungswerkzeuge stattfindet und einen rückwertigen, werkzeugseitigen Bereich, in dem das Handling der Bearbeitungswerkzeuge stattfindet. Auf das Handling der Bearbeitungswerkzeuge wird im Folgenden nicht näher eingegangen.

Lediglich der Werkzeugschlitten 18 fährt zwischen dem rückwertigen, werkzeugseitigen Bereich in dem vorderen werkstückseitigen Bereich hin und her, während alle anderen Komponenten auf ihrer entsprechenden Seite bleiben.

Die Führungseinrichtung 21, die auch als X-Führungseinrichtung bezeichnet werden könnte, ist wie bereits vorstehend erwähnt an der Vorderseite des Maschinenbetts 22 angeordnet und erstreckt sich insgesamt oberhalb der Verfahrebene des Werkzeugschlittens 18. Dies bedeutet, dass die Werkstückpositioniereinheit 20 über dem Werkzeugschlitten 18 hängt, das zu bearbeitende Werkstück folglich hängend bearbeitet wird. Die Führungseinrichtung 21 weist mehrere, im gezeigten Beispielsfall, drei Führungsschienen 25a, 25b, 25c auf, die jeweils einerseits an der Vorderseite 23 des Maschinenbetts 22 befestigt sind und andererseits mit der Werkstückpositioniereinheit 20 in Eingriff stehen.

Die Werkstückpositioniereinheit 20 ist wie bereits erwähnt, entlang den Führungsschienen 25a-25c in X-Achsrichtung 14 linear beweglich geführt.

Die Werkstückpositioniereinheit 20 besitzt einen Kreuzschlitten 26 und einen in Y-Achsrichtung 15 verfahrbar am Kreuzschlitten 26a gelagerten Y-Schlitten 27.

Zum Antrieb ist der Werkstückpositioniereinheit 20 ein X-Achs-Antrieb 28 zugeordnet, der im gezeigten Beispielsfall als Linearantrieb in Form eines Linearmotors ausgebildet ist.

Die Werkstückpositioniereinheit 20 umfasst neben dem Kreuzschlitten 26 den Y-Schlitten. Der Kreuzschlitten 26 besitzt hierzu eine der Kreuzschlitten-Rückwand entgegengesetzt angeordnete Kreuzschlitten-Vorderwand, an der wenigstens eine, insbesondere zwei in Y-Achsrichtung 15 verlaufende Y-Führungsschiene 29 befestigt ist.

Wie insbesondere in Figur 1 gezeigt, besitzt der Y-Schlitten 27 einen Grundkörper 30, der mit den beiden Y-Führungsschienen 29 gekoppelt ist, derart, dass der in Y-Achsrichtung 15 mit Hilfe eines an Bord der Werkstückpositioniereinheit 20 angeordneten Y-Achs-Antriebs 31 auf und ab bewegbar ist. Der Y-Achs-Antrieb 31 ist als Linearantrieb ausgestaltet, jedoch im Gegensatz zum X-Achs-Antrieb wird hier zweckmäßigerweise ein Linearantrieb in Form eines Spindelantriebs verwendet.

Der Y-Schlitten 27 weist einen um eine erste Rotationsachse 32, die sich in Y-Achsrichtung 15 erstreckt, rotierbaren, an dem Grundkörper 30 gelagerten Drehteller 33 auf.

Die Rotationsbewegung des Drehtellers 33 wird durch einen Rotationsantrieb 90 an Bord des Y-Schlittens 27 erzeugt.

Die Drehposition des Drehtellers 33 wird detektiert und überwacht und zwar mittels eines Drehpositions-Messsystems.

Ein wichtiger Aspekt der Erfindung ist, dass das bereits vorstehend beschriebene Werkstückmodul 19 mit der Werkstückpositioniereinheit 20 über eine Schnittstelleneinrichtung 34 lösbar, ein Auswechseln des Werkstückmoduls 19 erlaubend, verbunden ist.

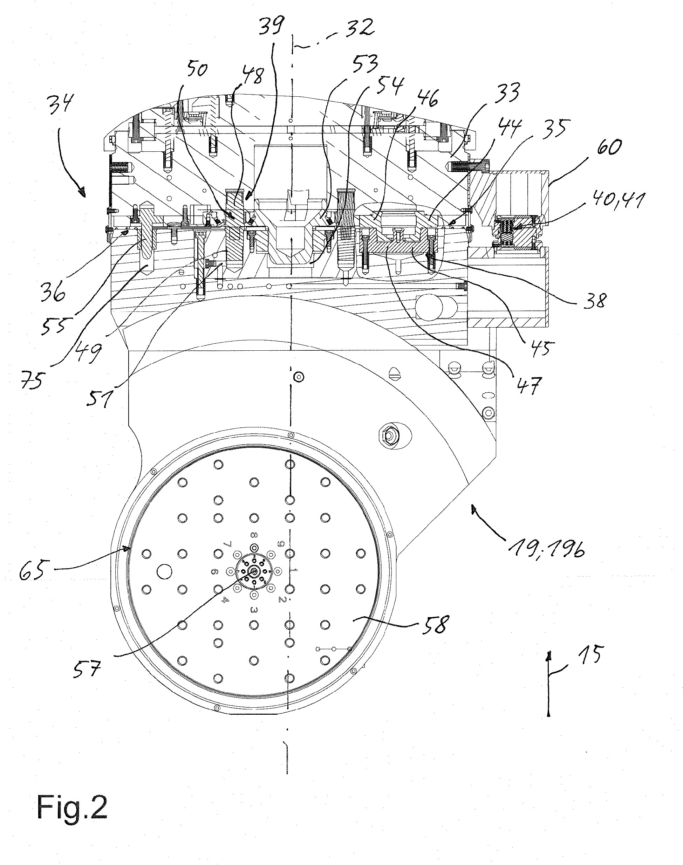

Wie insbesondere in Figur 2 gezeigt, besitzt die Schnittstelleneinrichtung 34 eine werkstückpositionierseitige Schnittstelle 35 und eine hierzu korrespondierende modulseitige Gegen-Schnittstelle 36.

Die Schnittstelle 35 ist im gezeigten Beispielsfall an der Unterseite des Drehtellers 33 ausgebildet. Beispielsweise kann die mit der Schnittstelle 35 ausgestattete Unterseite des Drehtellers 33 rechteckförmig, vorzugsweise quadratisch ausgebildet sein.

An Schnittstelle 35 und Gegen-Schnittstelle 36 ist eine Befestigungseinrichtung 38 zur Befestigung von Werkstückpositioniereinheit 20 und Werkstückmodul 19 aneinander ausgebildet. Ferner ist an Schnittstelle 35 und Gegen-Schnittstelle 36 eine Fluidübergabeeinrichtung 39 zur Übergabe eines Arbeitsfluids von der Werkstückpositioniereinheit 20 an das Werkstückmodul 19 ausgebildet.

Ferner ist an Schnittstelle 35 und Gegen-Schnittstelle 36 eine elektrische Leistungsenergieübergabeeinrichtung 40 zur Übertragung von elektrischer Leistung von der Werkstückpositioniereinheit 20 auf das Werkstückmodul 19 vorgesehen. Schließlich ist an Schnittstelle 35 und Gegen-Schnittstelle 36 eine Signalübergabeeinrichtung 41 zur Ermöglichung einer Signalübertragung zwischen der Werkstückpositioniereinheit 20 und dem Werkstückmodul 19 ausgebildet.

Insbesondere die Figuren 2, 4 und 7 zeigen verschiedene Ausführungsformen des Werkstückmoduls 19, das wie erwähnt die Gegen-Schnittstelle 36 aufweist. Die Gegen-Schnittstelle 36 ist bei den verschiedenen Werkstückmodulen 19, auf die nachfolgend noch näher eingegangen wird identisch zueinander ausgebildet, so dass wahlweise eines der nachfolgend beschriebenen Werkstückmodule 19 an der Schnittstelle 35 am Drehteller 33 befestigt werden kann.

Die Figur 7 zeigt eine erste Ausführungsform des Werkstückmoduls 19, das im Folgenden als Spannvorrichtung-Werkzeugmodul 19a bezeichnet wird, das Spannvorrichtung-Werkzeugmodul 19a dient zur Aufnahme und Festspannen des zu bearbeitenden Werkstücks, wobei es mittels des über die Schnittstelleneinrichtung 34 übertragenen Arbeitsfluids, insbesondere Hydraulikflüssigkeit, zweckmäßigerweise Hydrauliköl, betätigbare Spannelemente 42 zum Festspannen des zu bearbeitenden Werkstücks 80 aufweist.

Wie insbesondere in Figur 7 gezeigt, besitzt das Spannvorrichtung-Werkzeugmodul 19a die korrespondierend zur Schnittstelle 35 am Drehteller 33 ausgebildete Gegen-Schnittstelle 36. Im gezeigten Beispielsfall ist die Gegen-Schnittstelle 36 an der Oberseite einer Gegen-Schnittstellenplatte 43 ausgebildet, die korrespondierend zur insbesondere quadratischen Schnittstelle 35 an der Unterseite des Drehtellers 33 ausgebildet ist, so dass die beiden insbesondere quadratisch ausgebildeten Schnittstelle 35 und Gegen-Schnittstelle beim Befestigen aufeinander zu liegen kommen.

Die bereits vorstehend erwähnte Befestigungseinrichtung 38 besitzt sowohl Komponenten, die an der Schnittstelle 35 als auch Komponenten, die an der Gegen-Schnittstelle 36 ausgebildet sind.

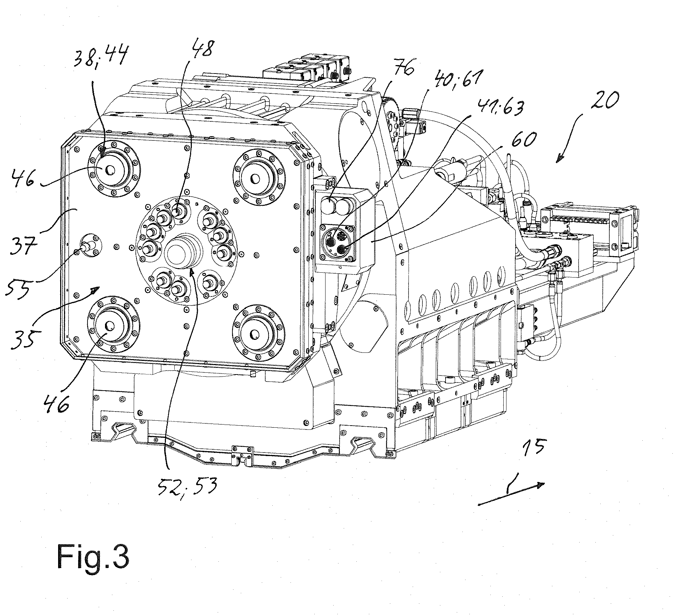

Wie insbesondere in den Figuren 3 und 7 gezeigt, besitzt die Befestigungseinrichtung 38 an der Schnittstelle 35 ausgebildete Befestigungselemente 44 und an der Gegen-Schnittstelle 36 ausgebildete Gegen-Befestigungselemente 45, die zur Befestigung des Spannvorrichtung-Werkzeugmoduls 19a an der Werkstückpositioniereinheit 20 in Eingriff miteinander und zum Lösen der Spannvorrichtung-Werkstückmodul 19a außer Eingriff zueinander bringbar sind.

Im gezeigten Beispielsfall sind mehrere Befestigungselemente 44 vorgesehen, die zweckmäßigerweise in Umfangsrichtung der Schnittstelle 35 verteilt zueinander angeordnet sind. Im gezeigten Beispielsfall des rechteckförmigen Querschnitts der Schnittstelle 35 befindet sich jeweils ein Befestigungselement 44 in einem der Quadranten der Rechteckfläche.

Korrespondierend hierzu sind die Gegen-Befestigungselemente 45 an der Gegen-Schnittstelle 36 angeordnet, also zweckmäßigerweise ist auch hier in jedem Quadranten der rechteckförmigen Gegen-Schnittstelle ein Gegen-Befestigungselement 45 angeordnet.

Im gezeigten Ausführungsbeispiel sind die Befestigungselemente 44 über Spannmittel zwischen einer Spannstellung, in der das Spannvorrichtung-Werkzeugmodul 19a an der Werkstückpositioniereinheit 20 festgespannt ist und einer das Spannvorrichtung-Werkstückmodul 19a freigebenden Freigabestellung relativ beweglich zur Schnittstelle 35 angeordnet. Zweckmäßigerweise sind die Befestigungselemente 44 als Kolbenelemente ausgebildet, die jeweils einen Spannkonus 46 aufweisen, der mit einem Gegen-Befestigungselement 45 in Form eines Gegenkonus 47 zusammenwirkt. Der Spannkonus 46 ist mittels Arbeitsfluid, insbesondere Hydraulikflüssigkeit zwischen der Freigabestellung und der Spannstellung bewegbar, wobei mittels Fluidbeaufschlagung eine Bewegung in die Spannstellung erfolgt, in der der Spannkonus 46 in den Gegenkonus 47 eintaucht und somit für eine Verspannung sorgt. Der Spannvorgang wird bei allen Befestigungselementen 44 und Gegen-Befestigungselementen 45 synchron durchgeführt, so dass ein gleichzeitiges Spannen und somit Befestigen des Spannvorrichtung-Werkzeugmoduls 19a an der Werkstückpositioniereinheit 20 erfolgt.

Wie insbesondere die Zusammenschau der Figuren 2 und 3 zeigt, verfügt die Schnittstelleneinrichtung 34 eine an der Schnittstelle 35 und an der Gegen-Schnittstelle 36 ausgebildete Fluidübergabeeinrichtung 39. Die Fluidübergabe zwischen der Werkstückpositioniereinheit 20 und dem Werkstückmodul 19, also beispielsweise des Spannvorrichtung-Werkstückmoduls 19a erfolgt über eine Art Steckverbindung. Hierzu sind insbesondere an der Schnittstelle 35 mehrere Übergabepins 48 angeordnet, die von der Schnittstellenfläche der Schnittstelle 35 nach außen abragen. Den Übergabepins 48 sind an der Gegen-Schnittstelle Übergabeöffnungen 49, insbesondere in Form von kreiszylindrischen Bohrungen zugeordnet, in die die Übergabepins 48 beim zuvor beschriebenen Befestigungsvorgang einfahren.

Wie insbesondere in Figur 2 gezeigt, An die Übergabepins 48 ist ein werkstückpositionierseitiges Fluidkanalsystem 50 angeschlossen, über das Arbeitsfluid, insbesondere Hydraulikflüssigkeit in den Bereich der Übergabepins 48 gelangt, falls der Fluidkreislauf gestartet wird. Die Übergabeöffnungen 49 stehen wiederum mit einem modulseitigen Fluidkanalsystem 51 in Verbindung, wodurch in der befestigten Gebrauchsstellung des Werkstückmoduls 19, also beispielsweise des Spannvorrichtung-Werkstückmoduls 19a, vom werkstückpositionierseitigen Fluidkanalsystem 50 stammendes Arbeitsfluid über die Übergabepins 48 zu den Übergabeöffnungen 49 gelangt und von dort über das modulseitige Fluidkanalsystem 41 zu den Spannelementen 42 des Spannvorrichtung-Werkstückmoduls 19 gelangt, so dass bei Bedarf ein Spannvorgang auf ein an das Spannvorrichtung-Werkzeugmodul 19a festzuspannendes und zu bearbeitendes Werkstück 80 eingeleitet werden kann.

Wie ferner die Zusammenschau der Figuren 2 und 3 zeigt, ist eine Zentriereinrichtung 52 zur Zentrierung des Werkstückmoduls, also beispielsweise des Spannvorrichtung-Werkstückmoduls 19a, an der Werkstückpositioniereinheit 20 vorgesehen, das heißt, die Gegen-Schnittstelle 36 am Spannvorrichtung-Werkstückmodul 19a wird lagegenau zur Schnittstelle 35 am Drehteller 33 ausgerichtet, so dass der anschließende Befestigungsvorgang und das Eintauchen der Übergabepins 48 in die Übergabeöffnungen 49 synchron ablaufen kann. Die Zentriereinrichtung 52 besitzt hierzu einen zentralen, koaxial zu einer Mitteilachse des Y-Schlitten 27 ausgerichteten Zentrierdorn 53, dessen Durchmesser insgesamt ungefähr dem Durchmesser der Spannkoni 46 der Befestigungselemente 44 entspricht. Dem Zentrierdorn 53 an der Schnittstelle 35 ist ein an der Gegen-Schnittstelle 36 ausgebildete Zentrieraufnahme 54 zugeordnet, in die der Zentrierdorn 53, den Spannkoni vorauseilend eintauchen kann.

Zur Zentriereinrichtung 52 gehört ferner ein exzentrisch zur Mittelachse angeordneter Zentrierpin 55, der insbesondere an der Schnittstelle 35 angeordnet ist und von der Schnittstellenfläche nach außen abragt. Dem Zentrierpin 55 ist insbesondere auf Seiten der Gegen-Schnittstelle 36 eine Zentrierbohrung 75 zugeordnet. Zentrierpin 55 und Zentrierbohrung 75 sorgen für eine lagegenaue Ausrichtung der Gegen-Schnittstelle 36 zur Schnittstelle 35, wodurch Komponenten an Schnittstelle 35 und Gegen-Schnittstelle, die nur in einer Orientierung der Schnittstelle 35 zur Gegen-Schnittstelle 36 zusammen passen, pass- und lagegenau zusammengefügt. insbesondere zusammengesteckt werden können, wie beispielweise die nachfolgend noch näher beschriebene Leistungsübergabeeinrichtung 40 und die Signalübergabeeinrichtung 41.

Wie insbesondere die Zusammenschau der Figuren 3 und 7 zeigt, besteht bei dem Spannvorrichtung-Werkstückmodul 19a lediglich der Bedarf einer mechanischen Befestigung des Spannvorrichtung-Werkzeugmoduls 19a an der Werkstückpositioniereinheit 20, wodurch eine Drehbewegung des Spannvorrichtung-Werkstückmoduls 19 um die erste Rotationsachse 32 möglich ist. Das Spannvorrichtung-Werkstückmodul 19 erlaubt eine 4-Achs-Bearbeitung von Werkstücken. Ein zusätzlicher Leistungsenergieeintrag und eine Signalübergabe zwischen dem Spannvorrichtung-Werkstückmodul 19 und der Werkstückpositioniereinheit 20 ist nicht notwendig, so dass hier die entsprechend ausgebildeten Anschlüsse an der Schnittstelle 35 blind bleiben.

Wie bereits erwähnt, ist es möglich, anstelle des Spannvorrichtung-Werkstückmoduls 19a alternativ ein Rundtisch-Werkstückmodul 19b an der Werkstückpositioniereinheit 20 anzubringen, wodurch eine einfach Umrüstung einer 4-Achs-Bearbeitung auf eine 5-Achs-Bearbeitung möglich ist.

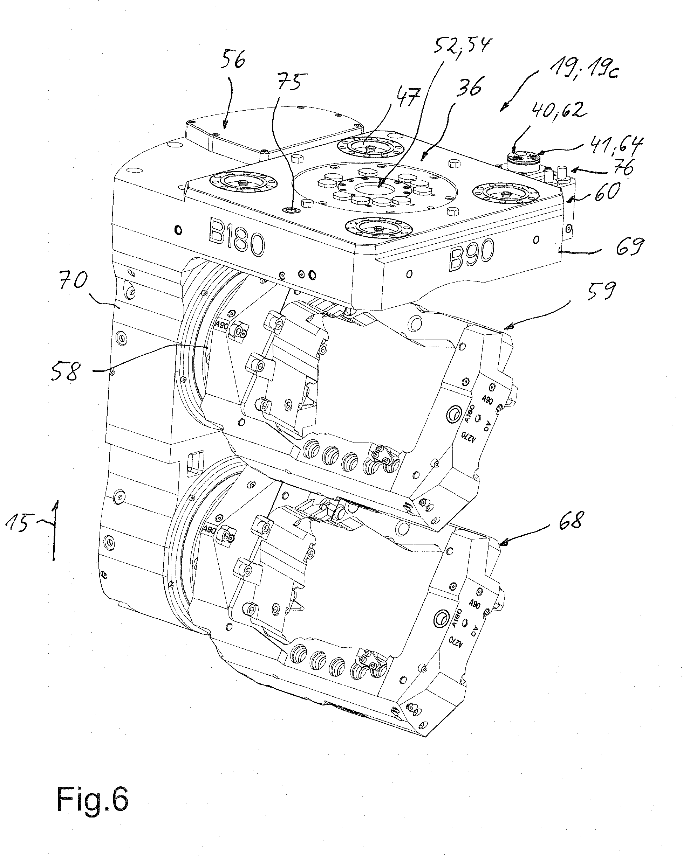

Die Figur 2 zeigt beispielhaft ein solches Rundtisch-Werkstückmodul 19b, das hier als einfaches Rundtisch-Werkstückmodul 19b ausgebildet ist. Das Rundtisch-Werkstückmodul 19b weist in diesem Fall einen mittels eines elektrischen Rotationsantriebs 56 um eine zweite Rotationsachse 57 rotierbaren Rundtisch 58 auf, der insbesondere nc gesteuert ist. An dem Rundtisch 58 ist eine Spanneinheit 59 zur Aufnahme und zum Festspannen eines zu bearbeitendes Werkstücks befestigbar, wie es beispielsweise im Falle einer anderen Ausführungsform des Rundtisch-Werkstückmoduls 19b in Figur 6 gezeigt ist.

Der elektrische Rotationsantrieb 56 befindet sich an Bord des Rundtisch-Werkstückmoduls 19b und benötigt hierfür elektrische Leistungsenergie, die über die Leistungsübergabeeinrichtung 40 der Schnittstelleneinrichtung 34 bereitgestellt wird, also von der Werkstückpositioniereinheit 20 auf das

Ferner ist an Schnittstelle 35 und Gegen-Schnittstelle 36 eine Signalübergabeeinrichtung 41 zur Ermöglichung einer Signalübertragung zwischen der Werkstückpositioniereinheit 20 und dem Werkstückmodul 19, also insbesondere dem einfachen Rundtisch-Werkstückmodul 19b ausgebildet.

Wie insbesondere in Figur 3 gezeigt, ist die elektrische Leistungsübergabeeinrichtung 40 als elektromechanische Steckverbindungseinrichtung ausgebildet. Zweckmäßigerweise sitzt die elektromechanische Steckverbindungseinrichtung seitlich neben der Schnittstelle 35 in einem separaten Zusatzmodul, das von einem Modulgehäuse 60 eingehaust ist. Dabei sitzt eine Gehäusehälfte an der Schnittstelle 35, also an der Peripherie des unteren Bereichs des Drehtellers 33 und die korrespondierend hierzu ausgebildete andere, insbesondere untere Gehäusehälfte an der Gegen-Schnittstellenplatte 43.

Die elektromechanische Steckverbindungseinrichtung, die im Folgenden als elektromechanische Steckverbindungseinrichtung bezeichnet wird, besitzt wenigstens einen elektrischen Rundsteckverbinder 61 zum Einstecken in ein elektrisches Gegenstück 62, das ebenfalls Bestandteil der elektromechanischen Steckverbindungseinrichtung ist.

Zweckmäßigerweise ist der elektrische Rundsteckverbinder 61 als Steckdose mit weiblichen Steckkontakten ausgebildet. Korrespondierend hierzu ist das elektrische Gegenstück 62 mit männlichen Gegen-Steckkontakten (nicht dargestellt), beispielsweise Steckpins ausgestattet. Zweckmäßigerweise befindet sich der wenigstens eine Rundsteckverbinder 61 an der Schnittstelle 35 und das elektrische Gegenstück 62 an der Gegen-Schnittstelle 36.

Wie ferner die Zusammenschau der Figuren 2 und 3 zeigt, kann an Schnittstelle 35 und Gegen-Schnittstelle 36 eine Zusatzfluidübergabeeinrichtung 76 ausgebildet sein. Die Zusatzfluidübergabeeinrichtung 76 kann beispielsweise ebenfalls im Bereich des Zusatzmoduls neben der Schnittstelle 35 angeordnet sein. Das Zusatzfluid kann beispielsweise Druckluft sein, dass zu Reinigungszwecken von der Werkstückpositioniereinheit 20 an das Werkstückmodul 19, also beispielsweise des einfachen Rundtisch-Werkstückmoduls 19b übergeben wird.

Die bereits erwähnte Signalübergabeeinrichtung 41 ist ebenfalls zweckmäßigerweise als elektromechanische Steckverbindungseinrichtung ausgebildet, die in diesem Fall als weitere, zweite elektromechanische Steckverbindungseinrichtung bezeichnet wird.

Auch die zweite elektromechanische Steckverbindungseinrichtung besitzt einen elektrischen Rundsteckverbinder 63, der im Folgenden als Signal-Rundsteckverbinder 63 bezeichnet wird. Der elektrische Signal-Rundsteckverbinder 63 dient zum Einstecken in ein elektrisches Gegenstück 64, das im Folgenden als elektrisches Signal-Gegenstück 64 bezeichnet wird. Zweckmäßigerweise ist der elektrische Signal-Rundsteckverbinder 63 als Steckdose mit weiblichen Steckkontakten ausgebildet, während das elektrische Signal-Gegenstück 64 mit männlichen Gegen-Steckkontakten ausgebildet ist, beispielweise Steckerpins. Auch hier ist es zweckmäßig, dass der elektrische Signal-Rundsteckverbinder 63 an der Schnittstelle 35 und das elektrische Signal-Gegenstück 64 an der Gegen-Schnittstelle 36 ausgebildet ist.

Die Signalübergabeeinrichtung 41 wird deshalb benötigt, da dem Werkstückmodul 19, also beispielsweise dem einfachen Rundtisch-Werkstückmoduls 19b eine Positionserkennungseinrichtung 65 zur Erkennung der Drehposition des zugeordneten Rundtischs 58 zugeordnet ist.

Obgleich in den Figuren nicht dargestellt, kann die Positionserkennungseinrichtung wenigstens einen an Bord des Werkstückmoduls, also des einfachen Rundtisch-Werkstückmoduls 19b befindlichen Positionsdetektor aufweisen, dessen Detektorsignale über die Schnittstelleneinrichtung 34 insbesondere an eine übergeordnete Steuerungseinheit übermittelt wird. Der Positionsdetektor kann beispielsweise als Positionssensor, insbesondere Drehgeber beziehungsweise Encoder ausgebildet sein.

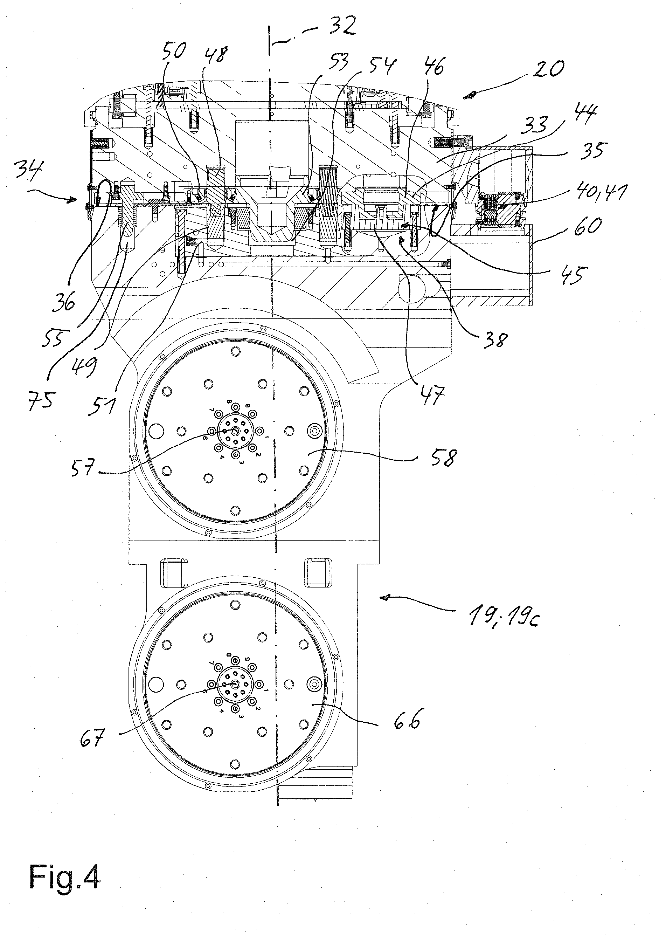

Die Figuren 4 bis 6 zeigen eine weitere Ausführungsform des Werkstückmoduls 19, das anstelle des Spannvorrichtung-Werkstückmoduls 19a oder des einfachen Rundtisch-Werkstückmoduls 19b an der Werkstückpositioniereinheit 20 anbringbar ist. Im gezeigten Beispielsfall ist die weitere Ausführungsform als doppeltes Rundtisch-Werkstückmodul 19c ausgebildet.

Dieses doppelte Rundtisch-Werkstückmodul zeichnet sich dadurch aus, dass es einen weiteren, zweiten Rundtisch 66 aufweist, der um eine insbesondere parallel zur zweiten Rotationsachse 57 ausgerichtete dritte Rotationsachse 67 rotierbar ist.

Wie insbesondere in Figur 6 gezeigt, ist am zweiten Rundtisch 66 wiederum eine weitere, zweite Spanneinheit 68 zur Aufnahme und zum Festspannen eines zu bearbeitenden Werkstücks befestigbar.

Das doppelte Rundtisch-Werkstückmodul erlaubt eine 5-Achs-Bearbeitung zweier Werkstücke 80, insbesondere gleichartiger Werkstücke während eines Bearbeitungsvorgangs, wodurch sich die Ausbringung der bearbeiteten Werkstücke 80 deutlich erhöhen lässt.

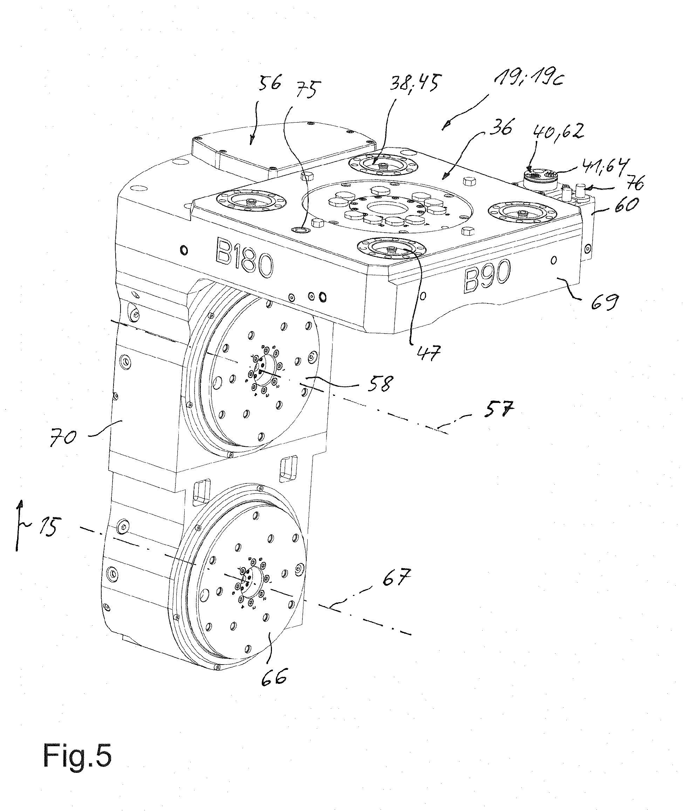

Wie ferner in Figur 5 gezeigt, besitzt das doppelte Rundtisch-Werkstückmodul 19c eine L-förmige Gestalt.

Es ist ein plattenförmiger Gegen-Schnittstellenabschnitt 69 vorgesehen, an dem in identischer Weise zu den zuvor beschriebenen Ausführungsformen des Werkstückmoduls 19 die Komponenten der Gegen-Schnittstelle 36 ausgebildet sind, also die Befestigungseinrichtung 38, die Fluidübergabeeinrichtung 39, die Leistungsenergieübergabeeinrichtung 40 und die Signalübergabeeinrichtung 41. Winklig zu dem plattenförmigen Gegen-Schnittstellenabschnitt 69, insbesondere rechtwinklig von diesem abstehend ist ein Lagerabschnitt 70 ausgebildet, an dem übereinander angeordnet, die beiden Rundtische 58, 66 gelagert sind.

Wie bereits erwähnt sitzt der Rotationsantrieb 56 für die Erzeugung der Rotationsbewegungen der Rundtische 58, 66 an Bord des Werkstückmoduls, also des doppelten Rundtisch-Werkstückmoduls 19c, wobei die Antriebsbewegung für die Rundtische 58, 66 über ein Getriebe (nicht dargestellt) auf die Rundtische 58, 66 eingeleitet werden kann.

Es ist noch einmal zu erwähnen, dass sämtliche beschriebenen Ausführungsformen des Werkstückmoduls 19, also das Spannvorrichtung-Werkstückmodul 19a, das einfache Rundtisch-Werkstückmodul 19b und das doppelte Rundtisch-Werkstückmodul 19c alternativ zueinander an der Werkstückpositioniereinheit 20 anbringbar sind, wodurch eine einfache und schnelle Umrüstung von einer 4-Achs-Bearbeitung auf eine 5-Achs-Bearbeitung und umgekehrt möglich ist. Ermöglicht wird diese Flexibilität dadurch, dass die Gegen-Schnittstelle 36 bei allen drei verschiedenen Ausführungsformen der Werkstückmodule identisch zueinander aufgebaut ist, so dass sie jeweils auf zur Schnittstelle am Drehteller 33 der Werkstückpositioniereinheit 20 passen. Aufwändige Umrüstarbeiten sind daher nicht notwendig, sondern es reicht ein einfaches Austauschen der Werkstückmodule im Sinne eines "Plug in" zum Umrüsten.

## Patentansprüche

1. Bearbeitungszentrum zur mechanischen Bearbeitung von Werkstücken (80) , mit wenigstens einer Bearbeitungseinheit (12) , die einen mit einem Bearbeitungswerkzeug zur Bearbeitung eines in einer Bearbeitungszone (17) angeordneten Werksstücks (80) bestückbaren Werkzeugschlitten (18) und eine mit einem Werkstückmodul (19a, 19b, 19c) zur Aufnahme des zu bearbeitenden Werkstücks (80) bestückbaren Werkstückpositioniereinheit (20) aufweist, wobei der Werkzeugschlitten (18) in einer Achsrichtung und die Werkstückpositioniereinheit (20) in die beiden anderen Achsrichtungen eines durch drei senkrecht aufeinander stehende Achsrichtungen X, Y, Z gebildeten kartesischen Koordinatensystems bewegbar sind, und wobei das Werkstückmodul (19a-19c) um eine erste Rotationsachse (56) rotierbar ist, wobei das Werkstückmodul (19a-19c) mit der Werkstückpositioniereinheit (20) über eine Schnittstelleneinrichtung (34) lösbar, ein Auswechseln des Werkstückmoduls (19a-19c) erlaubend verbunden ist, wobei die Schnittstelleneinrichtung (34) eine werkstückpositionierseitige Schnittstelle (35) und eine hierzu korrespondierende modulseitige Gegen-Schnittstelle (36) aufweist, wobei an Schnittstelle (35) und Gegen-Schnittstelle (36) eine Befestigungseinrichtung (38) zur Befestigung von Werkstückpositioniereinheit (20) und Werkstückmodul (19a-19c) aneinander ausgebildet ist, und wobei Schnittstelle (35) und Gegen-Schnittstelle (36) eine Fluidübergabeeinrichtung (39) zur Übergabe eines Arbeitsfluids von der Werkstückpositioniereinheit (20) an das Werkstückmodul (19a-19c) ausgebildet ist, **dadurch gekennzeichnet, dass** an Schnittstelle (35) und Gegen-Schnittstelle (36) eine elektrische Leistungsenergieübergabeeinrichtung zur Übergabe von elektrischer Leistungsenergie von der Werkstückpositioniereinheit (20) auf das Werkstückmodul (19a-19c) und eine Signalübergabeeinrichtung zur Ermöglichung einer Signalübertragung zwischen der Werkstückpositioniereinheit (20) und dem Werkstückmodul (19a-19c) ausgebildet sind.

2. Bearbeitungszentrum nach Anspruch 1, **dadurch gekennzeichnet, dass** das Werkstückmodul (19a-19c) als Spannvorrichtung-Werkstückmodul (19a) zur Aufnahme und Festspannen des zu bearbeitenden Werkstücks (80) ausgebildet ist, wobei das Spannvorrichtung-Werkstückmodul (19a) mittels des über die Schnittstelleneinrichtung (34) übertragenen Arbeitsfluids, insbesondere Hydraulikflüssigkeit, betätigbare Spannelemente (42) zum Festspannen des zu bearbeitenden Werkstücks (80) aufweist.

3. Bearbeitungszentrum nach Anspruch 1, **dadurch gekennzeichnet, dass** das Werkstückmodul als Rundtisch-Werkstückmodul (19b, 19c) ausgebildet ist, mit wenigstens einem mittels eines elektrischen Rotationsantriebs (56) um eine zweite Rotationsachse (57) rotierbaren, insbesondere nc gesteuerten Rundtisch (58), an dem eine Spanneinheit (59) zur Aufnahme und zum Festspannen eines zu bearbeitendes Werkstücks (80) befestigbar ist, wobei sich der elektrische Rotationsantrieb (56) an Bord des Rundtisch-Werkstückmoduls (19b, 19c) befindet und die elektrische Leistungsenergie für den Rotationsantrieb über die Schnittstelleneinrichtung (34) einleitbar ist.

4. Bearbeitungszentrum nach Anspruch 3, **dadurch gekennzeichnet, dass** das Rundtisch-Werkstückmodul (19c) einen zusätzlichen, weiteren Rundtisch (66) aufweist, der um eine insbesondere parallel zur zweiten Rotationsachse (57) ausgerichtete dritte Rotationsachse (67) rotierbar ist, an dem eine weitere Spanneinheit (68) zur Aufnahme und zum Festspannen eines zu bearbeitendes Werkstücks (80) befestigbar ist.

5. Bearbeitungszentrum nach Anspruch 4, **dadurch gekennzeichnet, dass** der Rotationsantrieb (56) zum Antrieb beider Rundtische (58, 66) ausgebildet ist.

6. Bearbeitungszentrum nach einem der Ansprüche 3 bis 5, **dadurch gekennzeichnet, dass** dem Werkstückmodul (19b, 19c) eine Positionserkennungseinrichtung (65) zur Erkennung der Drehposition des zugeordneten Rundtischs (58, 66) zugeordnet ist, wobei die Positionserkennungseinrichtung (65) wenigstens einen an Bord des Werkstückmoduls (19b, 19c) befindlichen Positionsdetektor, insbesondere Positionssensor, aufweist, dessen Detektorsignale über die Schnittstelleneinrichtung (34) übermittelt sind.

7. Bearbeitungszentrum nach einem der vorhergehenden Ansprüche, **dadurch gekennzeichnet, dass** die Befestigungseinrichtung (38) an der Schnittstelle (35) ausgebildete Befestigungselemente (44) und an der Gegen-Schnittstelle ausgebildete Gegen-Befestigungselemente (45) aufweist, die zur Befestigung des Werkstückmoduls (19a-19c) an der Werkstückpositioniereinheit (20) in Eingriff miteinander und zum Lösen des Werkstückmoduls (19a-19c) außer Eingriff zueinander bringbar sind.

8. Bearbeitungszentrum nach Anspruch 7, **dadurch gekennzeichnet, dass** die Befestigungselemente und/oder Gegen-Befestigungselemente über Spannmittel zwischen einer Spannstellung und einer das Werkstückmodul (19a-19c) freigebenden Freigabestellung relativ beweglich zur zugeordneten Schnittstelle (35) bzw. Gegen-Schnittstelle (36) gelagert sind.

9. Bearbeitungszentrum nach einem der vorhergehenden Ansprüche, **dadurch gekennzeichnet, dass** die elektrische Leistungsübergabeeinrichtung (40) als elektromechanische Steckverbindungseinrichtung ausgebildet ist, mit einem elektrischen Rundsteckverbinder (61) zum Einstecken in ein elektrischen Gegenstück (62) und dem elektrischen Gegenstück (62).

10. Bearbeitungszentrum nach Anspruch 9, **dadurch gekennzeichnet, dass** die Signalübergabeeinrichtung (41) als weitere elektromechanische Steckverbindungseinrichtung ausgebildet ist, mit einem elektrischen Signal-Rundsteckverbinder zum Einstecken in ein elektrisches Signal-Gegenstück (64) und dem elektrischen Signal-Gegenstück (64).

11. Bearbeitungszentrum nach einem der vorhergehenden Ansprüche, **dadurch gekennzeichnet, dass** die Schnittstelle (35) an der Unterseite eines um die erste Rotationsachse (32) rotatorisch antreibbaren, an der Werkstückpositioniereinheit (20) angeordneten Drehtellers (33) ausgebildet ist.

12. Bearbeitungszentrum nach einem der vorhergehenden Ansprüche, **dadurch gekennzeichnet, dass** die Schnittstelle (35) an der Unterseite des Drehtellers (33), rechteckförmig, vorzugsweise quadratisch ausgebildet ist.

13. Bearbeitungszentrum nach einem der vorhergehenden Ansprüche, **dadurch gekennzeichnet, dass** die Gegen-Schnittstelle (36) an einer insbesondere rechteckförmigen Gegen-Schnittstellenplatte (43) oder an einem plattenförmigen Gegen-Schnittstellenabschnitt (69) ausgebildet ist.

14. Bearbeitungszentrum zur mechanischen Bearbeitung von Werkstücken (80), mit wenigstens einer Bearbeitungseinheit (12), die einen mit einem Bearbeitungswerkzeug zur Bearbeitung eines in einer Bearbeitungszone (17) angeordneten Werksstücks (80) bestückbaren Werkzeugschlitten (18) und eine mit einem Werkstückmodul (19a-19c) zur Aufnahme des zu bearbeitenden Werkstücks bestückbaren Werkstückpositioniereinheit (20) aufweist, wobei der Werkzeugschlitten (18) in eine Achsrichtung und die Werkstückpositioniereinheit (20) in die beiden anderen Achsrichtungen eines durch drei senkrecht aufeinander stehende Achsrichtungen X, Y, Z gebildeten kartesischen Koordinatensystems bewegbar sind, und wobei das Werkstückmodul (19a-19c) um eine erste Rotationsachse rotierbar ist, wobei das Werkstückmodul mit der Werkstückpositioniereinheit (20) über eine Schnittstelleneinrichtung (34) lösbar, ein Auswechseln des Werkstückmoduls (19a-19c) erlaubend verbunden ist, wobei die Schnittstelleneinrichtung (34) eine werkstückpositionierseitige Schnittstelle (35) und eine hierzu korrespondierende modulseitige Gegen-Schnittstelle (36) aufweist, **dadurch gekennzeichnet, dass** das Werkzeugmodul ausgewählt ist aus der Gruppe bestehend aus die Gegen-Schnittstelle (36) aufweisendes Spannvorrichtung-Werkstückmodul (19a) zur Aufnahme und Festspannen des zu bearbeitenden Werkstücks (80), wobei das Spannvorrichtung-Werkstückmodul (19a) mittels Arbeitsfluid betätigbare Spannelemente (42) zum Festspannen des zu bearbeitenden Werkstücks (80) aufweist und die Gegen-Schnittstelle aufweisendes Rundtisch-Werkzeugmodul (19b, 19c), mit wenigstens einem mittels eines elektrischen Rotationsantriebs (56) um eine zweite Rotationsachse (57) rotierbaren Rundtisch (58, 66), an dem eine Spanneinheit (59, 68) zur Aufnahme und zum Festspannen eines zu bearbeitendes Werkstücks (80) befestigbar ist, wobei wahlweise das Spannvorrichtung-Werkstückmodul (19a) oder das Rundtisch-Werkstückmodul (19b, 19c) über die Schnittstelleneinrichtung (34) an der Werkstückpositioniereinheit (20) befestigbar ist.

15. Bearbeitungszentrum nach Anspruch 14, **dadurch gekennzeichnet, dass** das Rundtisch-Werkstückmodul (19b, 19c) entweder ein einfaches Rundtisch-Werkstückmodul (19b) mit einem einzelnen Rundtisch (58) oder ein doppeltes Rundtisch-Werkstückmodul (19c) mit einem ersten und einem um eine dritte Rotationsachse (67) rotatorisch antreibbaren zweiten Rundtisch (66) ist.
